(19)
Europäisches Patentamt
European Patent Office
Office européen des brevets

(11) EP 0 669 575 B1

(12) EUROPÄISCHE PATENTSCHRIFT

(45) Veröffentlichungstag und Bekanntmachung des Hinweises auf die Patenterteilung:
**16.12.1998 Patentblatt 1998/51**

(51) Int Cl.⁶: **G06F 11/10**

(21) Anmeldenummer: **95101104.8**

(22) Anmeldetag: **27.01.1995**

# (54) Elektronisches Rechenwerk

Electronic calculation unit

Unité de calcul électronique

(84) Benannte Vertragsstaaten:
**DE FR GB IT**

(30) Priorität: **26.02.1994 DE 4406391**

(43) Veröffentlichungstag der Anmeldung:
**30.08.1995 Patentblatt 1995/35**

(73) Patentinhaber: **ROBERT BOSCH GMBH**
**70442 Stuttgart (DE)**

(72) Erfinder:
- **Sulzberger, Peter**
  **D-72762 Reutlingen (DE)**
- **Boehl, Eberhard, Dr.**
  **D-72768 Reutlingen (DE)**

(56) Entgegenhaltungen:
- **IEICE TRANSACTIONS, Bd. E74,Nr. 11, 1.November 1991 TOKYO, JP, Seiten 3775-3779, XP 000280959 HAYASHI T ET AL 'A 64 B CMOS MAINFRAME EXECUTION UNIT MACROCELL WITH ERROR DETECTING CIRCUIT'**
- **IBM TECHNICAL DISCLOSURE BULLETIN, Bd. 29,Nr. 8, Januar 1987 NEW YORK US, Seiten 3732-3735, 'Fault-detecting adder'**
- **IEEE TRANSACTIONS ON NUCLEAR SCIENCE, Bd. NS-30,Nr. 6, Dezember 1983 NEW YORK US, Seiten 4333-4338, R. J. MAIER 'Low power error correction architecture for space'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 669 575 B1

**Beschreibung**

STAND DER TECHNIK

Die Erfindung betrifft ein elektronisches Rechenwerk, wie ALU-Prozessor, Controller od.dgl., zur arithmetischen Verknüpfung von durch Codebits codierten, über wenigsten einen Datenbus zugeführten digitalen Operanden zu ebenfalls durch Codebits codierten Datenworten nach der Gattung des Hauptanspruchs.

Bei derartigen Rechenwerken bzw. arithmetisch-logischen Einheiten können durch eine Vielzahl von Ursachen bedingte Fehler im laufenden Betrieb auftreten, die bei Nichtentdeckung zu einem Sicherheitsrisiko führen können, insbesondere bei sicherheitskritischen Anwendungen des Rechenwerks.

Aus einer Veröffentlichung von M. Nicolaidis "Efficient Implementations of Self-Checking Adders and ALUS", 23rd IEEE International Symposium on Fault Tolerant Computing, Toulouse, France, June 1993 Seiten 586 bis 595, ist eine Anordnung nach der Gattung des Hauptanspruchs bekannt, bei der einer ALU eine zusätzliche Übertragbildungseinrichtung zugeordnet ist, wobei die dupliziert gebildeten Übertragsbits auf Identität überprüft werden. Hierdurch können fehlerhaft gebildete übertragsbits und entsprechende fehlerhafte Ergebnisse aus arithmetischen Verknüpfungen erkannt werden.

Weiterhin ist es bekannt, arithmetische Codes für Operanden und arithmetisch verknüpfte Ergebnisse für ALUs vorzusehen und diese zu überprüfen. Hierzu wird beispielsweise auf die folgenden Veröffentlichungen verwiesen:

[1] Maloff, I. G., Camden, N. J.:
Checking Codes for Digital Computers, Proceedings of the IRE, April 1955, S. 487 - 488;

[2] Peterson, W. W.:
On Checking and Adder, IBM Journal, April 1958, S. 166 - 168;

[3] Brown, D. T.:
Error Detecting and Correcting Binary Codes for Arithmetic Operations, IRE Transactions on Electronic Computers, September 1960, S. 333 - 337;

[4] Lo, J. Ch., Thanawastien, S., Rao, T. R. N., Nicolaidis, M.:
An SFS Berger Check Prediction ALU and its Application to Self-checking Prozessor Designs, IEEE Transactions on Computer-Aided Design, vol. 11, No. 4, April 1992, S. 525 - 540;

[5] Holzapfel, H. P.:
Fehlertolerante VLSI-Prozessoren, Diss. TU München, 1987;

[6] Khodadad-Mostashiry, B.:
Parity Prediction in Combinational Circuits, Proceedings of the FTCS-9, IEEE Computer Society, 1979;

[7] Fujiwara, E., Haruta, K.:
Fault-Tolerant Arithmetic Logic Unit Using Parity-Based Codes, The Transactions of the IECE of Japan, vol. E 64, Nr. 10, October 1981, S. 653 - 660.

In [6] wird eine Lösung mit Paritätsbitvorhersage vorgestellt, die in [7] zur Anwendung von fehlerkorrierenden Codes ausgebaut wird. Allen bekannten Prüf- und Überwachungseinrichtungen ist gemeinsam, daß jeweils nur einzelne speziell auftretende Fehler erkannt werden können, andere dagegen nicht.

Aus HAYASHI IEICE Transaction, E 74 (1991) November, Nr. 11, Tokyo, JP, Seiten 3775-3779, HAYASHI T. et Al., ist bereits ein Rechenwerk mit einer Mehrzahl von Codeprüfungseinrichtungen bekannt.

VORTEILE DER ERFINDUNG

Das erfindungsgemäße Rechenwerk mit den kennzeichnenden Merkmalen des Hauptanspruchs hat den Vorteil, daß eine Vielzahl von Fehlermöglichkeiten erkannt werden kann. So können nicht nur fehlerhafte Übertragsbits, sondern auch fehlerhafte Bits der Operanden und der gebildeten Ergebnisse erkannt werden. Weiterhin können defekte Leitungen, insbesondere Leitungen zum Rechenwerk, und fehlerhafte Signalpegel durch die Anordnung des Rechenwerks, der Übertragbildungseinrichtung und der Codeprüfungseinrichtung zueinander sowie durch geeignete Übertragungscharakteristiken erkannt werden.

Eine noch sicherere Erkennung fehlerhafter und undefinierter Signalpegel, beispeilsweise infolge von Unterbrechnungs-und Kurzschlußfehlern, ist dadurch möglich, daß in den jeweils 1 Bit der Operanden aufweisenden Leitungen (Operandenbitleitungen) zu den einzelnen Stufen des Rechenwerks und der Übertragbildungseinrichtungen sowie zur Codeprüfungseinrichtung jeweils ein Pegelwandler geschaltet ist, wobei die Pegelwandler des Rechenwerks, der Übertragbildungseinrichtungen und der Codeprüfungseinrichtung jeweils abgestuft unterschiedliche Ansprecheigenschaften aufweisen. Vorzugsweise sind die drei Eingangsschwellspannungsbereiche der drei Gruppen von Pegelwandlern nicht überlappend ausgebildet, wobei der Eingangsschwellspannungsbereich der Pegelwandler der Codeprüfungseinrichtung zwischen den Eingangsschwellspannungsbereichen der Pegelwandler der beiden anderen Gruppen liegt und ein Eingangsschwellspannungsbereich als derjenige Spannungsbereich definiert ist, unterhalb dessen ein Pegelwandler sicher ein O-Signal und oberhalb dessen er sicher ein 1-Signal erkennt. Auf diese Weise wird sichergestellt, daß bei Erkennung des gleichen Pegels der Pegelwandler des Rechenwerks und der Übertragbildungseinrichtungen auch die Pegelwandler der Codeprüfungseinrichtung den gleichen Pegel 1 erkennt. Ist dieser Pegel fehlerhaft entstanden, so stellt die Codeprüfungseinrichtung diesen Fehler fest. Erkennen dagegen die Pegelwandler des Rechenwerks und der Übertragbildungseinrichtungen unterschiedliche Pegel, so wird durch den Vergleich der Übertragsbits in der Prüfeinrichtung der Fehler erkannt.

Durch die in den Unteransprüchen aufgeführten Maßnahmen sind vorteilhafte Weiterbildungen und Verbesserungen des in Anspruch 1 angegebenen Rechenwerks möglich.

Durch die beabstandete Anordnung der einzelnen Stufen des Rechenwerks zu den entsprechenden Stufen der Übertragbildungseinrichtung an den Verbindungsleitungen können Unterbrechungsfehler einer Operandenbitleitung besonders sicher erkannt werden, insbesondere wenn jede Stufe der Übertragbildungseinrichtung mit den zugeordneten, jeweils ein Bit der beiden Operanden aufweisenden Verbindungsleitungen (Operandenbitleitungen) über einen einzigen Anschluß verbunden ist.

Die Ausgänge der Codeprüfungseinrichtung zur Überprüfung der Ausgangssignale sind mit der Prüfeinrichtung verbunden, so daß diese neben der Überprüfung der Übertragungsbits auch noch die Ausgangssignale der Codeprüfungseinrichtung mitüberprüfen kann.

Die Prüfeinrichtung ist dabei zweckmäßigerweise aus SCC (Self-Checking Checker)-Stufen gebildet, wobei nur bei unterschiedlichen Signalen (0- bzw. 1-Signalen) auf jedem von wenigstens zwei Eingangspaaren unterschiedliche Ausgangssignale erzeugbar sind, die die fehlerfreie Arbeitsweise anzeigen. Derartige SCC-Stufen sind für sich aus The Computer Science Library "Error Detecting Codes, Self-Checking Circuits and Applications", John Wakerly, BNR INC., Palo Alto, CA and Stanford University für sich bekannt. Je nach Zahl der zu überprüfenden Signalpaare können solche SCC-Stufen baumartig miteinander verknüpft werden.

## ZEICHNUNG

Ein Ausführungsbeispiel der Erfindung ist in der Zeichnung dargestellt und in der nachfolgender Beschreibung näher erläutert. Es zeigen:

- Fig. 1 ein Blockschaltbild von zwei Stufen (für 2 Bits) einer ALU mit einer Prüf- und überwachungseinrichtung gemäß der Erfindung,
- Fig. 2 ein beispielhaftes Schaltbild einer Codeprüfungseinrichtung,
- Fig. 3 ein beispielhaftes Schaltbild einer SCC-Stufe als Prüfeinrichtung,
- Fig. 4 eine Übertragbildungseinrichtung und
- Fig. 5 ein Signaldiagramm zur Erläuterung der unterschiedlichen Eingangsschwellspannungsbereiche der den einzelnen Stufen vorgeschalteten Inverter.

## BESCHREIBUNG DES AUSFÜHRUNGSBEISPIELS

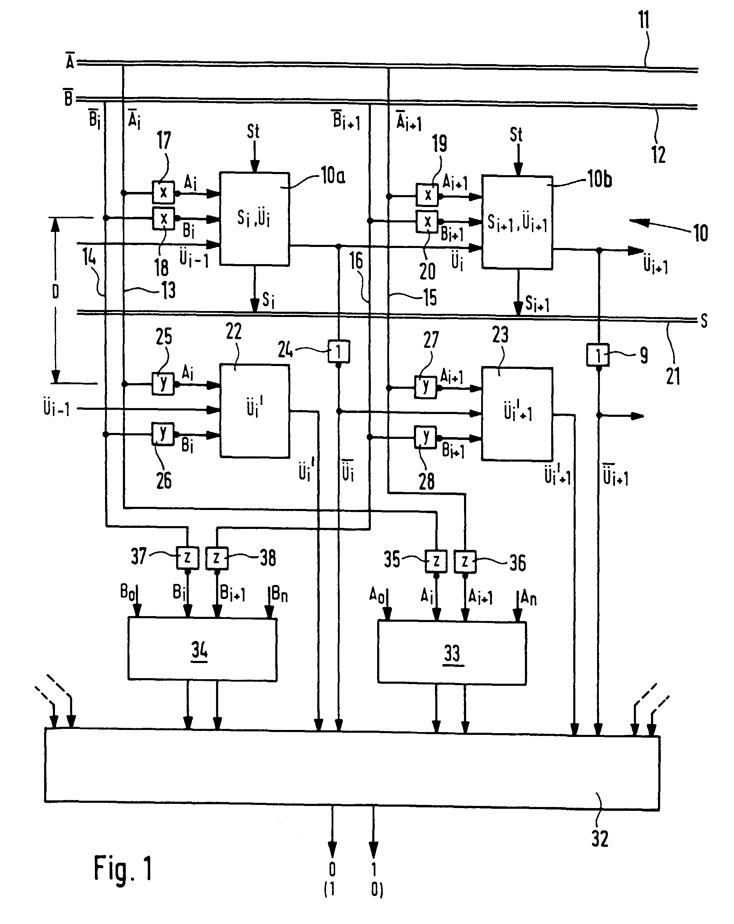

Bei dem in Fig. 1 dargestellten Ausführungsbeispiel besteht eine ALU 10 (arithmetisch-logische Einheit) aus verschiedenen Einzelelementen zur Verarbeitung bzw. Verknüpfung der einzelnen Bits von zwei Operanden $\overline{A}$ und $\overline{B}$. Zur Vereinfachung sind in Fig. 1 nur zwei solcher Einzelelemente 10a und 10b zur Verarbeitung des i-ten Bits und des (i+1)-ten Bits dieser beiden Operanden. Diese Einzelelemente 10a, 10b können auch Einzelelemente eines anderen elektronischen Rechenwerks, wie eines Prozessors, eines Controllers od.dgl., sein.

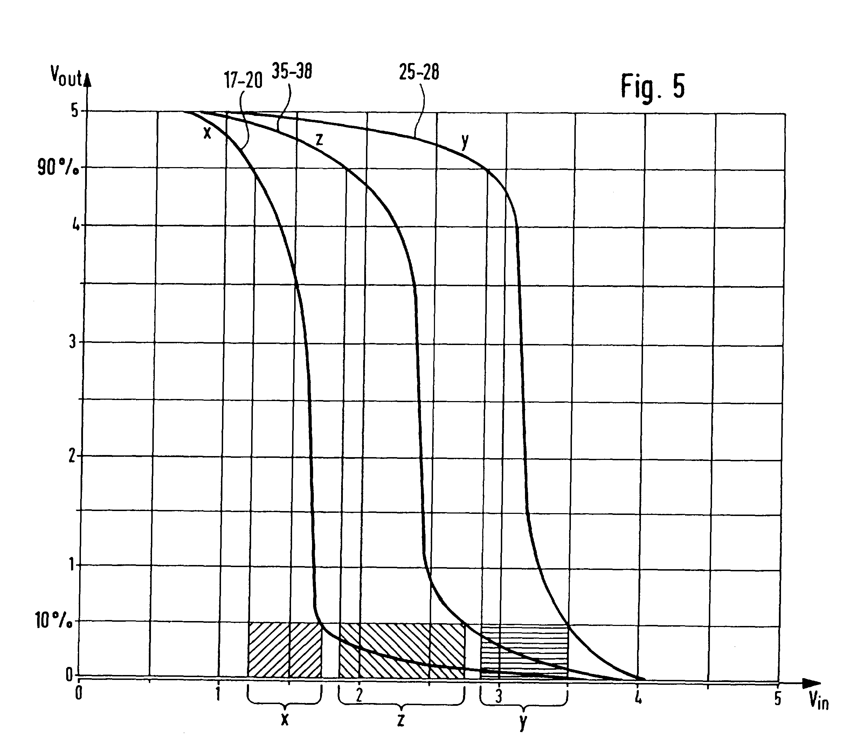

Die Operanden $\overline{A}$ und $\overline{B}$ liegen an zwei Datenbussen 10, 11 an, wobei die i-ten Bits über Verbindungsleitungen 13, 14 und die (i+1)-ten Bits über Verbindungsleitungen 15, 16 sowie über Inverter 17 - 20 als Pegelwandler den Einzelelementen 10a, 10b zugeführt sind. Die Inverter 17 - 20 weisen Schaltcharakteristiken x gemäß dem in Fig. 5 dargestellten Spannungsdiagramm auf.

In der ALU 10 werden die Informationsbits der Operanden $\overline{A}$ und $\overline{B}$ entsprechend den angelegten Steuersignalen St verarbeitet, beispielsweise addiert, subtrahiert, multipliziert oder in anderer bekannter Weise logisch verknüpft. Dabei wird von jedem Einzelelement 10a, 10b ein übertragsbit $Ü_i$ bzw. $Ü_{i+1}$ für das jeweils nächste Einzelelement sowie ein Verknüpfungsbit, beispielsweise ein Summenbit $S_i$ bzw. $S_{i+1}$, gebildet, das jeweils einem Ergebnis-Datenbus 21 zugeführt wird. Die Operanden $\overline{A}$ und $\overline{B}$ sowie das jeweils dem Datenbus 21 zugeführte Ergebnisdatenwort S sind codiert, beispielsweise über ein übliches gerades oder ungerades Paritätsbit. Da dieser Code kein arithmetischer Code ist, müssen insbesondere für den Fall der Addition besondere Maßnahmen vorgesehen werden, damit das Ergebnis-Datenwort wiederum entsprechend codiert ist (Codebildungseinheit, hier nicht dargestellt), jedoch auch bei nichtlinearen logischen Operationen (wie UND- bzw. ODER-Verknüpfungen) sind zusätzliche logische Verknüpfungen erforderlich. Demgegenüber sind bei linearen logischen Verknüpfungen (Exor- bzw. Äquivalenz-Verknüpfungen, Verschiebeoperationen und Negationen) nur sehr einfache Verknüpfungen zur Erzeugung des Paritätsbits für das Ergebnis erforderlich. Komplexere Operationen (wie z. B. NAND-, NOR-, SUB-, DEC-, INC-, MUL- und DIV-Operationen) sind auf die vorstehenden Grundoperationen zurückzuführen.

Insbesondere für die Subtraktionsoperationen ist das Komplement des Subtrahenden zu bilden und damit dem einlaufenden Übertrag zum Minuenden zu addieren. Die Verarbeitungsgeschwindigkeit der hierzu erforderlichen, nicht näher dargestellten Codebildungseinheit ist durch geeignete Dimensionierung und Strukturierung so zu wählen, daß kein Geschwindigkeitsverlust durch die Codebildung eintritt. Dies ist ohne weiteres möglich, wenn das übertragungswort ähnlich wie im Addierer gebildet wird. Die Bildung einer Codierung mit mehr als einem Paritätsbit ist in der genannten Druckschrift [7] beschrieben, ansonsten in der Druckschrift [6]. Auch beliebige andere Codes mit dem Datenwort hinzugefügten Codebits sind in ähnlicher Art einsetzbar. Eine Zusammenfassung verschiedener Codes wird in der Druckschrift [5] beschrieben. Die Bildung der Codierung ist zwar nicht Gegenstand der vorliegenden Erfindung, sie ist jedoch eine Voraussetzung für den wirkungsvollen Einsatz der im folgenden beschriebenen Überwachungsanordnung.

Mit Hilfe von übertragbildungseinrichtungen 22, 23 wird wie in den Einzelelementen 10a, 10b nochmals ein übertragsbit gebildet. Hierzu ist selbstverständlich für jedes Bit der Operanden eine solche übertragbildungseinrichtung erforderlich, wobei zur Vereinfachung nur die Übertragbildungseinrichtungen 22, 23 für das i-te Bit und des (i+1)-te Bit dargestellt sind. Jeder übertragbildungseinrichtung 22, 23 ist jeweils das über Inverter invertierte übertragungsbit des nächstniedrigen Einzelelements der ALU 10 zugeführt. So wird das Übertragungsbit $Ü_i$ des Einzelelements 10a über einen Inverter 24 als invertiertes übertragungsbit $\overline{Ü}_i$ der Übertragbildungseinrichtung 23 zugeführt, und entsprechend wird das Übertragungsbit $Ü_{i+1}$ des Einzelelements 10b der ALU 10 über einen Inverter 9 als invertiertes Übertragungsbit $\overline{Ü_{i+1}}$ der nicht dargestellten Übertragbildungseinrichtung für das (i+2)-te Bit zugeführt. Weiterhin werden den übertragbildungseinrichtungen 22, 23 die entsprechenden Operandenbits $A_i$, $B_i$ bzw. $A_{i+1}$, $B_{i+1}$ über die Verbindungsleitungen 13 - 16 und Inverter 25 - 28 als Pegelwandler zugeführt. Diese Inverter 25 - 28 besitzen ein der y-Kurve in Fig. 5 entsprechendes Schaltverhalten.

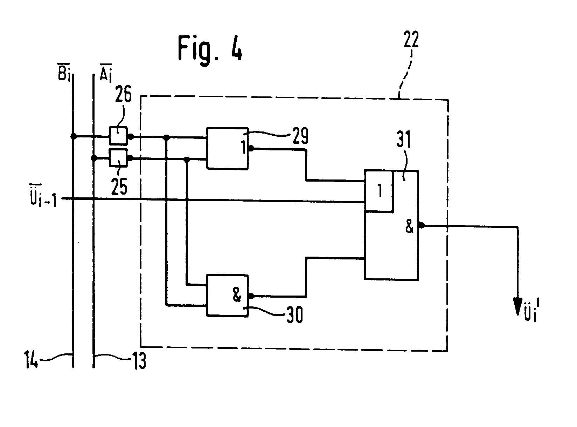

Eine detailliertere Darstellung eines Schaltungsbeispiels für eine solche übertragbildungseinrichtung 22, 23 ist in Fig. 4 dargestellt. Es handelt sich dabei beispielsweise um die übertragbildungseinrichtung 22. Die Operandenbits $\overline{A}_i$ und $\overline{B}_i$ werden von den Verbindungsleitungen 13, 14 abgezweigt und über die Inverter 25, 26 mit Schaltcharakteristik y parallel einem NOR-Gatter 29 und einem NAND-Gatter 30 zugeführt. Das Ausgangssignal des NOR-Gatters 29 wird mit dem übertragungsbit $\overline{Ü_{i+1}}$ in einem kombinierten Gatter 31 mit einer ODER-Verknüpfung verknüpft, wobei das Ausgangssignal des NAND-Gatters 30 mit diesem verknüpften Signal wiederum mit einer NOR-Verknüpfung verknüpft wird. Der Ausgang des kombinierten Gatters 31 weist dann das aus den Operandenbits gebildete duplizierte Übertragsbit zur Überwachung auf. Eine derartige Übertragbildungseinrichtung ist beispielsweise in der eingangs angegebenen Veröffentlichung "Efficient Implementations of Self-Checking Adders and ALUs" näher beschrieben.

Das jeweils am Ausgang eines Einzelelements 10a, 10b der ALU 10 gebildete Übertragsbit muß bei korrekter Funktion dem in der entsprechenden Übertragbildungseinrichtung 22, 23 gebildeten Übertragsbit entsprechen. Um dies zu überprüfen, wird beispielsweise das am Ausgang der Übertragbildungseinrichtung 22 gebildete übertragsbit $Ü_i'$ und das am Ausgang des Einzelelement 10a gebildete und durch den Inverter 24 invertierte übertragsbit als invertiertes übertragsbit $\overline{Ü}_i$ einer Prüfeinrichtung 32 zugeführt. Die Signale $Ü_i'$ und $\overline{Ü}_i$ müsssen bei korrekter Funktion also unterschiedlich sein, es muß sich also um ein 0- und 1-Signal oder um ein 1- und 0-Signal handeln. Dieses entgegengesetzte Signalverhalten wird in der Prüfeinrichtung 32 geprüft, die später noch anhand von Fig. 3 näher erläutert wird.

Zur weiteren Erhöhung der Sicherheit gegenüber Bitverfälschungen der Operanden sind noch zwei Codeprüfungseinrichtungen 33, 34 vorgesehen, wobei die Codeprüfungseinrichtung 33 zur überprüfung des Codes des Operanden $\overline{A}$ und die Codeprüfungseinrichtung 34 zur überprüfung des korrekten Codes des Operanden $\overline{B}$ vorgesehen ist. Hierzu werden den Codeprüfungseinrichtungen 33, 34 sämtliche Operandenbits der beiden Operanden $\overline{A}$ und $\overline{B}$ über Inverter 35 - 38 als Pegelwandler zugeführt. Diese Inverter 35 besitzen eine Schaltcharakteristik gemäß der z-Kurve in Fig. 5. Zur Vereinfachung sind nur die Inverter 35 - 38 für das jeweils i-te und (i+1)-te Bit der beiden Operanden $\overline{A}$ und $\overline{B}$ dargestellt.

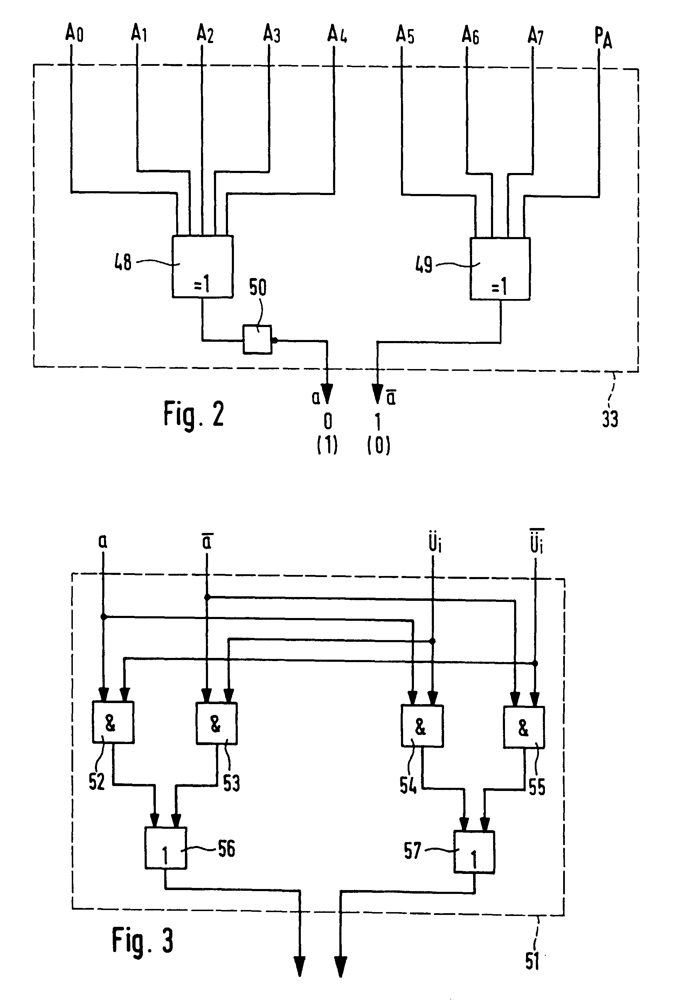

In Fig. 2 ist als Beispiel die Codeprüfungseinrichtung 33 detaillierter dargestellt. Eine entsprechende Codeprüfungseinrichtung ist auch in der bereits zitierten Veröffentlichung von John Wakerly "Error Detecting Codes, Self-Checking Circuits and Applications" beschrieben. Sämtliche Operandenbits $A_0$ bis $A_7$ des im Beispiel als 8-Bit-Operand ausgebildeten Operanden A sowie das entsprechende Paritätsbit $P_A$ sind in zwei Gruppen zwei Exor-Gattern 48 und 49 zugeführt. Dabei sind die Operandenbits $A_0$ bis $A_4$ dem Exor-Gatter 48 und die Operandenbits $A_5$ bis $A_7$ dem Exor-Gatter 49 zugeführt. Der Ausgang des Exor-Gatters 48 wird über einen Inverter 50 invertiert und dient als erstes Ausgangssignal, während der Ausgang des Exor-Gatters 49 direkt als zweites Ausgangssignal der Codeprüfungseinrichtung 33 dient.

Diese Codeprüfungseinrichtung 33 dient zur Codeprüfung eines Operanden mit einem einzelnen Paritätsbit bei gerader Parität. Aus den Operandenbits und dem Paritätsbit können willkürlich zwei Gruppen gebildet werden, die den beiden Exor-Gattern 48, 49 zugeführt werden, wobei die Ausgänge dieser beiden Exor-Gatter 48, 49 dann zwingend das gleiche Ausgangssignal aufweisen müssen, wenn eine korrekte Codierung vorliegt. Durch die Invertierung über den Inverter 50 liegen somit am Ausgang der Codeprüfungseinrichtung 33 bei korrekter Codierung immer zwei inverse Signale vor. Bei ungerader Parität entfällt der Inverter 50, um zu erreichen, daß wiederum zwei inverse Ausgangssignale vorliegen.

In der Prüfeinrichtung 32 muß nun lediglich geprüft werden, ob jedes der angelegten Signalpaare inverse Signale aufweist. Es handelt sich dabei um die Ausgangssignalpaare der beiden Codeprüfungseinrichtungen 33, 34 sowie um die Signalpaare der duplizierten übertragbits der einzelnen Stufen. Für eine solche Prüfung des Vorliegens inverser Signale eignen sich sogenannte SCC-Checker (Self-Checking Checker), wobei in Fig. 3 eine solche SCC-Stufe 51 detaillierter dargestellt ist. Eine detailliertere Beschreibung einer SCC-Stufe 51 findet sich auch in der bereits angegebenen Veröffentlichung von John Wakerly "Error Detecting Codes, Self-Checking Circuits and Applications", Seiten 66, 67. Als Beispiel sind der in Fig. 3 dargestellten SCC-Stufe 51 die beiden inversen Ausgangssignale a und $\bar{a}$ der Codeprüfungseinrichtung 33 und die beiden inversen Übertragsbits $Ü_i'$ und $\overline{Ü_i}$ zugeführt. Dabei sind einem ersten UND-Gatter 52 die Signale a und $\overline{Ü_i}$, einem zweiten UND-Gatter 53 die Signale $\bar{a}$ und $Ü_i'$, einem dritten UND-Gatter 54 die Signale a und $Ü_i'$ und einem vierten UND-Gatter 55 die Signale $\bar{a}$ und $\overline{Ü_i}$ zugeführt. Die Ausgänge der beiden UND-Gatter 52, 53 sind über ein ODER-Gatter 56 und die beiden Ausgänge der UND-Gatter 54, 55 über ein ODER-Gatter 57 miteinander verknüpft. Die beiden Ausgänge der ODER-Gatter 56, 57 bilden die beiden Ausgänge der SCC-Stufe 51, an denen bei korrekten Eingangssignalen wiederum inverse Signale anliegen müssen.

Die Prüfeinrichtung 32 ist in Abhängigkeit der Zahl der zu prüfenden Signalpaare aus mehreren solchen SCC-Stufen 51 aufgebaut. Jeweils zwei Signalpaare werden in einer SCC-Stufe 51 zu einem Signalpaar umgewandelt, wobei wiederum zwei Ausgangssignalpaare zweier SCC-Stufen über eine weitere SCC-Stufe verknüpft werden, so daß eine baumartige Anordnung von SCC-Stufen vorliegt. Am Ausgang der Prüfeinrichtung 32 liegt somit wiederum ein inverses Signalpaar vor, wenn alle Operanden- und sonstigen Bits korrekt sind. Liegen gleiche Signale an diesen beiden Ausgangsleitungen vor, so kann eine Warneinrichtung, insbesondere eine Warnleuchte oder eine entsprechende Bildschirmanzeige bei Vorhandensein eines Bildschirms, auf einen Fehler des Systems aufmerksam machen, oder kritische Systemfunktionen können automatisch abgeschaltet werden, wenn ein solcher Fehler vorliegt.

Für die Erkennung von Unterbrechungsfehlern einer Operandenbitleitung bzw. Verbindungsleitung 13 - 16 ist zum einen die Anordnung der Codeprüfungseinrichtungen 33, 34 und zum anderen die Beabstandung der Signalabzweigungen von den Verbindungsleitungen 13, 16 zu den Einzelelementen 10a, 10b der ALU 10 einerseits und der übertragbildungseinrichtungen 22, 23 andererseits maßgeblich. Diese Signalabzweigungen zu den Einzelelementen 10a, 10b und den Übertragbildungseinrichtungen 22, 23 müssen zwischen den Datenbussen 11, 12 und den Codeprüfungseinrichtungen 33, 34 angeordnet sein. Die Reihenfolge der Abzweigungen zu den Einzelelementen 10a, 10b und den Übertragbildungseinrichtungen 22, 23 können dabei auch vertauscht sein, sie sollten jedoch einen Mindestabstand D voneinander aufweisen, um solche Unterbrechungsfehler sicher erkennen zu können. Durch diesen Abstand wirkt eine Unterbrechung entweder auf die Übertragungsbildungseinheit 22, 23 oder auf das Einzelelement 10a, 10b. Wirkt sich die Unterbrechung auf beide Einheiten aus, so wirkt sie sich durch diese Anordnung auch auf die Codeprüfer 33 oder 34 aus.

Zur Erkennung von Kurzschlußfehlern der Operandenbitleitungen, die zu veränderten (erhöhten oder verringerten) Signalpegeln führen können, dienen die Inverter 17 - 20, 25 - 28 sowie 35 - 38. Dabei können auch Fehler infolge schlechter Signalpegel erkannt werden, die auf andere Ursachen zurückzuführen sind. Als Eingangsschwellspannungsbereich der Inverter wird im folgenden derjenige Spannungsbereich bezeichnet, unterhalb dessen der Inverter sicher eine logische "0" und oberhalb dessen er sicher eine logische "1" am Zahleneingang erkennt. Diese Eingangsschwellspannungsbereiche der drei Gruppen von Invertern mit dem Schaltverhalten x, y und z sind in Fig. 5 schraffiert dargestellt. Sie überlappen sich gegenseitig nicht und sind so angeordnet, daß für die jeweils betrachteten Bedingungen der Eingangsschwellspannungsbereich der Inverter 35 - 38 mit dem Schaltverhalten z zwischen denen der Inverter 17 - 20 mit dem Schaltverhalten x und der Inverter 25 - 28 mit dem Schaltverhalten y liegt. Auf diese Weise wird sichergestellt, daß bei Erkennung des gleichen Pegels durch die Inverter 17 - 20 mit dem Schaltverhalten x und der Inverter 25 - 28 mit dem Schaltverhalten y auch die Inverter 35 - 38 mit dem Schaltverhalten z den gleichen Pegel erkennen. Ist dieser Pegel fehlerhaft entstanden, so stellt der Codeprüfer diesen Fehler fest. Erkennen die Inverter mit dem Schaltverhalten x und y unterschiedliche Pegel, so wird durch Vergleich der Übertragsbit $Ü_i'$ und $\overline{Ü_i}$ bzw. $Ü'_{i+1}$ und $\overline{Ü_{i+1}}$ in der Prüfeinrichtung 32 der Fehler erkannt.

Die so geforderten Eigenschaften der Inverter mit dem Schaltverhalten x, y und z sind durch geeignete Dimensionierung erreichbar. In CMOS-Technik ist dafür das Verhältnis der geometrischen Abmessungen des p-Kanal-Transistors zum n-Kanal-Transistor maßgebend. Wählt man z. B. für die Inverter mit dem Schaltverhalten x doppelt so breite n-Kanal-Transistoren (gegenüber der Breite der p-Kanal-Transistoren bei gleicher Länge), so sind beispielsweise für die Inverter mit dem Schaltverhalten z die vierfache und für die Inverter mit dem Schaltverhalten y die achtfache Breite des p-Kanal-Transistors gegenüber dem entsprechenden n-Kanal-Transistor sinnvoll. Die entsprechenden Übertragungskennlinien bzw. Schaltkennlinien zeigen deutliche Unterschiede im Eingangsschwellspannungsbereich. Durch Simulation aller Parameterschwankungen und Umgebungsbedingungen ist die Einhaltung der obigen Forderung überprüfbar. Durch die beschriebene Anordnung können somit alle mit einer gewissen Wahrscheinlichkeit auftretenden Fehler erkannt werden. Ein falsches Operandenbit kann durch Codeprüfung mittels der Codeprüfungseinrichtungen 33, 34 erkannt werden.

Entsprechend könnte auch noch ein Bitfehler des verknüpften Signals S überprüft werden. Ein falsches übertragsbit wird durch Duplizierung der Überträge mittels der Übertragbildungseinrichtungen 22, 23 erkannt. Unterbrechungsfehler von Operandenbitleitungen werden durch die Anordnung der Einzelelemente 10a, 10b der ALU 10 und der Übertragbildungseinrichtungen 22, 23 relativ zur Anordnung der Codeprüfungseinrichtungen 33, 34 in Verbindung mit einer Beabstandung der Signalabzweigungen erkannt. Schließlich können undefinierte Pegel von Signalen, beispielsweise infolge von Kurzschlußfehlern der Operandenbitleitungen, durch die als Pegelwandler eingesetzten Inverter 17 - 20, 25 - 28 sowie 35-38 erkannt werden.

In Verallgemeinerung des Ausführungsbeispiels kann anstelle der invertierten Operanden ($\bar{A}$, $\bar{B}$) auch mit den nichtinvertierten Operanden (A, B) gearbeitet werden, wenn die entsprechenden Verknüpfungsoperationen modifiziert werden (Summen- und Übertragsbildung).

Weiterhin kann für die Übertragsbildung sowohl in den Blöcken 10a, 10b als auch in den Blöcken 22, 23 anstelle des Übertrags der vorangegangenen Bitstufe $Ü_{i-1}$, $Ü_i$ ein Übertrag $Ü_{i-2}$, $Ü_{i-3}$ ... zusammen mit den Operandenbits $A_{i-1}$, $B_{i-1}$, $A_{i-2}$, $B_{i-2}$ ... benutzt werden. Solche "carry look ahead"-Schaltungen sind in der Literatur bekannt, z.B. "Efficient Implementations of Self-Checking Adders and ALUs". Zu beachten ist dabei, daß auch hier die entsprechenden Pegelwandler mit Charakteristiken x bzw. y für die Operandenbits $A_{i-1}$, $B_{i-1}$, $A_{i-2}$, $B_{i-2}$ benutzt werden und sowohl Beabstandung als auch Codeprüfung entsprechend Fig. 1 durchgeführt werden.

**Patentansprüche**

**1.** Elektronisches Rechenwerk, wie ALU, Prozessor, Controller oder dgl., zur arithmetischen oder logischen Verknüpfung von durch Codebits codierten, über wenigstens einen Datenbus zugeführten digitalen Operanden zu ebenfalls durch Codebits codierten Datenworten, wobei die arithmetische Verknüpfung der Bits der Operanden stufenweise erfolgt und in jeder Stufe ein oder mehrere Operandenbits der Operanden verknüpft werden und mindestens ein Übertragsbit gebildet wird, mit einer zusätzlichen Übertragbildungseinrichtung für die einzelnen Stufen, mit einer Prüfeinrichtung zur Überprüfung der doppelt gebildeten Übertragsbits jeweils auf Identität und mit einer Einrichtung zur Bildung von Codebits für das Ergebniswort aus den Operandenbits und deren Codebits sowie Übertragsbits unter Berücksichtigung der geforderten Funktion des Rechenwerkes, wobei für jeden Operanden ($\bar{A}$, $\bar{B}$) zusätzlich eine Codeprüfungseinrichtung (33, 34) vorgesehen ist, die mit den einzelnen Leitungen des wenigstens einen Datenbusses (11, 12) über Verbindungsleitungen (13, 16) verbunden ist, dadurch gekennzeichnet, daß das Rechenwerk (10) und die Übertragbildungseinrichtung (22, 23) zwischen der Codeprüfungseinrichtung (33, 34) und dem Datenbus (11, 12) an den Verbindungsleitungen (13, 16) angeschlossen sind, daß den Codeprüfungseinrichtungen (33, 34), dem Rechenwerk (10) und der Übertragungseinrichtung (22, 23) Gatter oder Pegelwandler (17 - 20, 25 - 28, 35 - 38) vorgeschaltet sind, die jeweils abgestufte unterschiedliche Ansprech- und Schalteigenschaften aufweisen.

**2.** Rechenwerk nach Anspruch 1, dadurch gekennzeichnet, daß seine einzelnen Stufen (10a, 10b) jeweils beabstandet von den Stufen der Übertragbildungseinrichtung (22, 23) an den Verbindungsleitungen (13 - 16) angeschlossen sind.

**3.** Rechenwerk nach Anspruch 2, dadurch gekennzeichnet, daß jede Stufe der Übertragbildungseinrichtung (22, 23) mit den zugeordneten, jeweils ein Bit der beiden Operanden ($\bar{A}$, $\bar{B}$) aufweisenden Verbindungsleitungen (13 - 16) über einen einzigen Anschluß verbunden ist.

**4.** Rechenwerk nach einem der vorhergehenden Ansprüche, dadurch gekennzeichnet, daß die Ausgänge der Codeprüfungseinrichtung (33, 34) zur Überprüfung der Ausgangssignale mit der Prüfeinrichtung (32) verbunden sind.

**5.** Rechenwerk nach einem der vorhergehenden Ansprüche, dadurch gekennzeichnet, daß die Prüfeinrichtung (32) aus SCC(Self-Checking Checker)-Stufen (51) gebildet ist, wobei nur bei unterschiedlichen Signalen (0- bzw. 1-Signalen) auf jedem von wenigstens zwei Eingangspaaren von Leitungen unterschiedliche Ausgangssignale erzeugbar sind, die die fehlerfreie Arbeitsweise anzeigen.

**6.** Rechenwerk nach Anspruch 5, dadurch gekennzeichnet, daß die unterschiedlichen Eingangs- und Ausgangssignale inverse Signale sind.

**7.** Rechenwerk nach einem der vorhergehenden Ansprüche, dadurch gekennzeichnet, daß Eingangsschwellspannungsbereiche der Gatter oder Pegelwandlern (17 - 20, 25 - 28, 35 - 38) sich nicht überlappen, wobei der Eingangsschwellspannungsbereich der Gatter oder Pegelwandler (35 - 38) der Codeprüfungseinrichtung (33, 34) zwischen den Eingangsschwellspannungsbereichen der Gatter oder Pegelwandler (17 - 20, 25 - 28) der anderen Gatter oder Pegelwandler liegen und ein Eingangsschwellspannungsbereich als derjenige Spannungsbereich definiert ist, unterhalb dessen ein Gatter oder Pegelwandler sicher ein O-Signal und oberhalb dessen er sicher ein 1-Signal erkennt.

**8.** Rechenwerk nach Anspruch 7, dadurch gekennzeichnet, daß die drei Eingangsschwellspannungsbereiche der drei Gruppen von Pegelwandlern (17 - 20, 25 - 28, 35 - 38) sich nicht überlappen, wobei der Eingangsschwellspannungsbereich der Pegelwandler (35 - 38) der Codeprüfungseinrichtung (33, 34) zwischen den Eingangsschwellspannungsbereichen der Pegelwandler (17 - 20, 25 - 28) der beiden anderen Gruppen liegt und ein Eingangsschwellspannungsbereich als derjenige Spannungsbereich definiert ist, unterhalb dessen ein Pegelwandler sicher ein 0-Signal und oberhalb dessen er sicher ein 1-Signal erkennt.

**9.** Rechenwerk nach Anspruch 7 oder 8, dadurch gekennzeichnet, daß die Pegelwandler (17 - 20, 25 - 28, 35 - 38) als Inverter ausgebildet sind.

**10.** Rechenwerk nach einem der Ansprüche 1 bis 6, dadurch gekennzeichnet, daß die an die Leitungen (13 - 16) angeschlossenen Gatter des Rechenwerks (10) einerseits, die entsprechenden Gatter der Übertragbildungseinrichtung (22, 23) andererseits und schließlich die entsprechenden Gatter der Codeprüfungseinrichtungen (33, 34) jeweils abgestuft unterschiedliche Ansprech- und Schalteigenschaften aufweisen.

**11.** Rechenwerk nach Anspruch 10, dadurch gekennzeichnet, daß die Eingangsschwellspannungsbereiche der Eingangsgatter des Rechenwerks (10), der Übertragbildungseinrichtung (22, 23) und der Codeprüfer (33, 34) sich nicht überlappen, wobei der Eingangsschwellspannungsbereich der Eingangsgatter der Codeprüfungseinrichtung (33, 34) zwischen den Eingangsschwellspannungsbereichen der Eingangsgatter der zwei anderen Einheiten liegt und ein Eingangsgatter ein Schaltelement ist, von dem mindestens ein Eingang mit der Leitung (13 - 16) verbunden ist, und wobei ein Eingangsschwellspannungsbereich als derjenige Spannungsbereich definiert ist, unterhalb dessen ein Pegelwandler sicher ein O-Signal und obetnalb dessen er sicher ein 1-Signal erkennt.

## Claims

**1.** Electronic arithmetic unit such as ALU, processor, controller or the like, for arithmetic or logic operation on digital operands coded by code bits and supplied via at least one data bus, to form data words also coded by code bits, wherein the arithmetic operation on the bits of the operands takes place in stages and one or more operand bits of the operands are operated on in each stage and at least one carry bit is formed, comprising an additional carry-forming device for the individual stages, comprising a testing device for checking the carry bits, formed double, for identity in each case, and comprising a device for forming code bits for the result word from the operand bits and their code bits and carry bits, taking into consideration the required operation of the arithmetic unit, wherein a code testing device (33, 34) is additionally provided for each operand ($\overline{A}$, $\overline{B}$), which code testing device is connected to the individual lines of the at least one data bus (11, 12) via link lines (13, 16), characterized in that the arithmetic unit (10) and the carry-forming device (22, 23) are connected to the link lines (13, 16) between the code testing device (33, 34) and the data bus (11, 12), that the code testing devices (33, 34), the arithmetic unit (10) and the carry device (22, 23) are preceded by gates or level shifters (17-20, 25-28, 35-38) which in each case have graduated different operating and switching characteristics.

**2.** Arithmetic unit according to Claim 1, characterized in that its individual stages (10a, 10b) are in each case connected to the link lines (13-16) at a distance from the stages of the carry-forming device (22, 23).

**3.** Arithmetic unit according to Claim 2, characterized in that each stage of the carry-forming device (22, 23) is connected via a single connection to the associated link lines (13-16), which in each case exhibit one bit of the two operands ($\overline{A}$, $\overline{B}$).

**4.** Arithmetic unit according to one of the preceding claims, characterized in that the outputs of the code testing device (33, 34) are connected to the testing device (32) for checking the output signals.

**5.** Arithmetic unit according to one of the preceding claims, characterized in that the testing device (32) is formed from SCC (self-checking checker) stages (51), wherein different output signals which indicate error-free operation can only be generated when there are different signals (0 and, respectively, 1 signals) on at least two input pairs of lines.

**6.** Arithmetic unit according to Claim 5, characterized in that the different input and output signals are inverse signals.

**7.** Arithmetic unit according to one of the preceding claims, characterized in that input threshold voltage ranges of the gates or level shifters (17-20, 25-28, 35-38) do not overlap, wherein the input threshold voltage range of the gates or level shifters (35-38) of the code testing device (33, 34) is located between the input threshold voltage ranges of the gates or level shifters (17-20, 25-28) of the other gates or level shifters and an input threshold voltage range is defined as the voltage range below which a gate or level shifter reliably detects a 0 signal and above which it reliably detects a 1 signal.

8. Arithmetic unit according to Claim 7, characterized in that the three input threshold voltage ranges of the three groups of level shifters (17-20, 25-28, 35-38) do not overlap, wherein the input threshold voltage range of the level shifters (35-38) of the code testing device (33, 34) is located between the input threshold voltage ranges of the level shifters (17-20, 25-28) of the other two groups and an input threshold voltage range is defined as the voltage range below which a level shifter reliably detects a 0 signal and above which it reliably detects a 1 signal.

9. Arithmetic unit according to Claim 7 or 8, characterized in that the level shifters (17-20, 25-28, 35-38) are constructed as inverters.

10. Arithmetic unit according to one of Claims 1 to 6, characterized in that the gates of the arithmetic unit (10) which are connected to the lines (13-16), on the one hand, the corresponding gates of the carry-forming device (22, 23), on the other hand, and, finally, the corresponding gates of the code testing devices (33, 34) exhibit different operating and switching characteristics in a graduated manner in each case.

11. Arithmetic unit according to Claim 10, characterized in that the input threshold voltage ranges of the input gates of the arithmetic unit (10), of the carry-forming device (22, 23) and of the code testers (33, 34) do not overlap, wherein the input threshold voltage range of the input gates of the code testing device (33, 34) is located between the input threshold voltage ranges of the input gates of the other two units and an input gate is a switching element, at least one input of which is connected to the line (13-16), and wherein an input threshold voltage range is defined as the voltage range below which a level shifter reliably detects a 0 signal and above which it reliably detects a 1 signal.

**Revendications**

1. Unité de calcul électronique telle que ALU, processeur, contrôleur, ou moyen analogue pour une combinaison arithmétique ou logique d'opérandes numériques fournis par au moins un bus de données avec codage de bits, pour des mots de données également en codage de bits,
la combinaison arithmétique des bits des opérandes se faisant par étages et dans chaque étage, on combine un ou plusieurs bits d'opérandes et on forme au moins un bit de transfert,

- un générateur de transfert supplémentaire pour les différents étages,
- une installation de contrôle pour contrôler le bit de transfert, dupliqué, pour en vérifier l'identité et,
- une installation pour former des bits de code pour le mode résultat des bits d'opérandes et de leurs bits de code ainsi que de bits de transfert en tenant compte de la fonction exigée de l'unité de calcul,
- et pour chaque opérande ($\bar{A}$ et $\bar{B}$), il est prévu en outre une installation de contrôle de code 33, 34 reliée aux différentes lignes d'au moins un bus de données (11, 12) par des lignes de liaison (13, 16),

caractérisée en ce que
l'unité de calcul (10) et le générateur de transfert (22, 23) sont branchés entre l'installation de contrôle de code (33, 34) et le bus de données (11, 12) aux lignes de liaison (13, 16),

- les installations de contrôle de code (33, 34), l'unité de calcul (10) et le générateur de transfert (22, 23) sont précédés par des portes ou des convertisseurs de niveau (17-20, 25-28, 35-38) ayant chaque fois des propriétés de mise en oeuvre et de commutation étagées de manière différente.

2. Unité de calcul selon la revendication 1,
caractérisée en ce que
ses différents étages (10a, 10b) sont écartés des étages du générateur de transmission (22, 23) dans leur raccordement aux lignes de liaison (13-16).

3. Unité de calcul selon la revendication 2,
caractérisée en ce que
chaque étage du générateur de transfert (22, 23) est relié par un seul branchement aux lignes de liaison (13-16) associées ayant chaque fois un bit des deux opérandes ($\bar{A}$ , $\bar{B}$).

4. Unité de calcul selon l'une des revendications précédentes,
caractérisée en ce que
les sorties de l'installation de contrôle de code (33, 34) sont reliées à l'installation de contrôle (32) pour vérifier les signaux de sortie.

5. Unité de calcul selon l'une des revendications précédentes,
caractérisée en ce que
l'installation de contrôle (32) est formée par des étages SCC (autocontrôle) (51) et ce n'est que pour des signaux différents (signaux d'état 0 ou d'état 1) sur chacune des deux paires d'entrée de lignes on a des signaux de sortie différents que cela correspond à un fonctionnement sans defaut.

6. Unité de calcul selon la revendication 5, caractérisée en ce que les signaux d'entrée et de sortie différents sont des signaux inverses.

7. Unité de calcul selon l'une des revendications précédentes, caractérisée en ce que les plages de tension de seuil d'entrée des portes ou des convertisseurs de niveau (17-20, 25-28, 35-38) ne se chevauchent pas et la plage de tension de seuil d'entrée des portes ou convertisseurs de niveau (35-38) de l'installation de contrôle de code (33, 34) se situe entre les plages de tension de seuil d'entrée des portes ou convertisseurs de niveau (17-20, 25-28) des autres portes ou convertisseurs de niveau et une plage de tension de seuil d'entrée est définie comme plage de tension en dessous de laquelle une porte ou un convertisseur de niveau garantit un signal 0 et au-dessus de laquelle il garantit un signal 1.

8. Unité de calcul selon la revendication 7, caractérisée en ce que les trois plages de tension de seuil d'entrée des trois groupes de convertisseurs de niveau (17-20, 25-28, 35-38) ne se chevauchent pas et la plage de tension de seuil d'entrée des convertisseurs de niveau (35-38) de l'installation de contrôle de code (33, 34) se situe entre les plages de tension de seuil d'entrée des convertisseurs de niveau (17-20, 25, 28) des deux autres groupes et une plage de tension de seuil d'entrée est définie comme plage de tension en dessous de laquelle un convertisseur de niveau garantit un signal d'état 0 et au-dessus de laquelle il garantit un signal d'état 1.

9. Unité de calcul selon les revendications 7 ou 8, caractérisée en ce que les convertisseurs de niveau (17-20, 25-28, 35-38) sont réalisés comme des inverseurs.

10. Unité de calcul selon l'une des revendications 1-6 caractérisée en ce que les portes de l'unité de calcul (10) reliées aux lignes (13-16) d'une part, les portes correspondantes du générateur de transfert (22, 23) d'autre part et enfin les portes correspondantes des installations de contrôle de code (33, 34) ont des caractéristiques de sollicitation et de commutation étagées de manière différente.

11. Unité de calcul selon la revendication 10 caractérisée en ce que les plages de tension de seuil d'entrée des portes d'entrée de l'unité de calcul (10), du générateur de transfert (22, 23) et du contrôleur de code (33, 34) ne se chevauchent pas et la plage de tension de seuil d'entrée de la porte d'entrée de l'installation de contrôle de code (33, 34) se situe entre les plages de tension de seuil d'entrée des portes d'entrée de deux autres unités et une porte d'entrée est un élément de commutation dont au moins une entrée est reliée à la ligne (13-16) et une plage de tension de seuil d'entrée est définie comme plage de tension en dessous de laquelle un convertisseur de tension garantit un signal 0 et au-dessus de laquelle il garantit un signal 1.

11
A
B
Bi
Ai
Bi+1
Ai+1
St
17
Ai
10a
Si,Üi
Bi
18
Üi-1
14
13
D
Si
16
15
19
Ai+1
10b
Si+1,Üi+1
20
Bi+1
Üi
Üi+1
Si+1
12
10
S
21
25
Ai
22
24
1
Üi'
Üi-1
26
Bi
27
Ai+1
23
Üi'+1
28
Bi+1
9
37
38
35
36
z
Bo
Bi
Bi+1
Bn
34
Ao
Ai
Ai+1
An
33
32
0
(1
1
0)

Fig. 1

A0
A1
A2
A3
A4
A5
A6
A7
PA
48
=1
50
49
=1
a
ā
0
(1)
1
(0)
33

Fig. 2

a
ā
Üi
Ūi
&
&
&
&
52
53
54
55
1
56
57
1
51

Fig. 3

Fig. 4
22
$\overline{B_i}$
$\overline{A_i}$
26
29
1
31
25
$\overline{Ü_{i-1}}$
1
&
&
30
$Ü_i'$
14
13

Fig. 5
Vout
Vin
90%
10%
17-20
35-38
25-28
x
y
z
0
1
2
3
4
5